# EUROPÄISCHE PATENTSCHRIFT

(11) **EP 3 295 264 B1**
(45) Veröffentlichungstag und Bekanntmachung des Hinweises auf die Patenterteilung: **26.07.2023**
(21) Anmeldenummer: 15759681.8
(22) Anmeldetag: 20.08.2015
(51) Int. Cl.: G05B 19/042

(54) **VERFAHREN ZUR GENERIERUNG EINER SCHALTSEQUENZ IN EINER INDUSTRIELLEN ANLAGE UND VORRICHTUNG**
METHOD FOR GENERATING A SWITCHING SEQUENCE IN AN INDUSTRIAL SYSTEM, AND DEVICE
PROCÉDÉ DE GÉNÉRATION D'UNE SÉQUENCE DE COMMUTATION DANS UNE INSTALLATION INDUSTRIELLE ET DISPOSITIF

(43) Veröffentlichungstag der Anmeldung: 21.03.2018
(73) Patentinhaber: Siemens Aktiengesellschaft, 80333 München (DE)
(72) Erfinder: MÜLLER, Andreas, 91083 Baiersdorf (DE); PESCHKE, Jörn, 90489 Nürnberg (DE)
(74) Vertreter: Siemens Patent Attorneys
(86) Internationale Anmeldenummer: PCT/EP2015/069175
(87) Internationale Veröffentlichungsnummer: WO 2017/028931

(56) Entgegenhaltungen:
- WO-A1-2014/040776
- US-A1- 2013 218 437

## Beschreibung

Aus verschiedenen Gründen wie z. B. Pausenregelung, Schichtplanung, Störungen oder Abläufen im Produktionsprozess, kann es erforderlich sein, Produktionsanlagen insgesamt oder in Teilen vorübergehend in einen Standby-Zustand zur Energieeinsparung zu versetzen.

Dabei gilt: Als "Standby" wird ein Gerätezustand bezeichnet, in dem mindestens eine Funktion, aber nicht die Hauptfunktion erfüllt wird, bei dem ein deutlich verminderter Energieverbrauch herrscht und die Hauptfunktion jederzeit wieder vorbedingungslos aktiviert werden kann. Das Aktivieren und Verlassen von Standby-Zuständen ("Schaltvorgang") ist allerdings nicht instantan, also unverzüglich, sondern benötigt eine gewisse Zeit.

Je nach Grad der Verringerung des Energieverbrauchs können weiterhin mehrere unterschiedlich "tiefe" Standby-Zustände existieren, die sich aus der individuellen Beschaffenheit der jeweils betrachteten (Teil-)Anlage oder Komponente ergeben.

Aufgrund des komplexen Aufbaus von Produktionsanlagen und der ausgeführten Prozesse ist das System aus Produktionsanlage und Funktionen dynamisch, weshalb das vorübergehende Versetzen von Anlagen insgesamt oder Teilen von ihnen in einen Standby-Zustand genaue Kenntnis über Eigenschaften und Zusammenhänge der beteiligten Entitäten auf unterschiedlichen Betrachtungsebenen (Komponente, Aggregat, Teilanlage, usw., in Kontext mit Prozessschritt, Teilprozess, etc.) mit jeweiligen Abhängigkeiten erfordert.

Maßgebliche Variablen sind die Zeiten für das Erreichen von Standby aus der Hauptfunktion und das Erreichen der Hauptfunktion aus dem Standby sowie die minimale und maximale Verweildauer im Standby.

Weitere Variablen können anlagenstruktur- oder prozessbedingte Vorbedingungen sein, welche Vorrang vor der reinen Zeitbetrachtung haben können. Des Weiteren können während des Schaltvorgangs sog. "Synchronisationszustände" relevant sein, in denen zuerst abhängige Entitäten bestimmte Zustände eingenommen haben müssen, und die gesondert identifiziert und gekennzeichnet werden müssen.

Schaltvorgänge und ihre Konsequenzen müssen nachvollziehbar und überwachbar sein. Daher müssen Schaltvorgänge in Anlagen bestimmten Sequenzen von Schaltaktionen, im Folgenden auch Schaltpfade genannt, folgen, die sich aufgrund von Merkmalen der Entitäten und dem Wissen über die Anlagenbeschaffenheit ergeben. Diese ist jedoch entsprechend ihres Lebenszyklus Veränderungen (z. B. durch Umbau) unterworfen, mit Auswirkungen auf die Gültigkeit der Schaltpfade, die dann angepasst werden müssen. Die Ansteuerung einzelner Komponenten entlang der Pfade zum Versetzen in einen Standby Zustand bzw. zur Reaktivierung erfolgt dann durch entsprechende technische Mittel, z. B. mittels PROFIenergy-Kommandos.

Voraussetzung für die Ermittlung und Abarbeitung von Schaltpfaden ist ein hinreichend vollständiges Anlagenmodell, das den Aufbau einer Produktionsanlage unter den folgenden Aspekten beschreibt:
- Hierarchie,
- Aggregate und Einzelkomponenten sowie ihrer Zusammenhänge untereinander im Hinblick auf Produktionsabläufe, technische Randbedingungen etc.,
- Zustandsautomaten, deren Aufbau sich aus den möglichen Standby-Zuständen der Entitäten mit jeweiliger Energieeinsparung, den jeweils benötigten Schaltzeiten und eventuell vorhandene Einschränkungen der Schaltmöglichkeiten der Komponenten ergibt; diese sind abhängig von den jeweiligen Komponenten selbst sowie ihren individuellen Verschaltungen.

Bislang wird in einem eigenständigen Engineering-Schritt daraus manuell das nötige "Anlagenschaltmodell" gebildet und mit den weiteren erforderlichen Informationen versehen. Das Wissen über die zugrundeliegenden Zusammenhänge findet sich dann zwar im Modell wieder, es wird aber nur manuell für die Bestimmung der anzunehmenden Einschränkungen genutzt. Aus diesen vordefinierten Merkmalen und Kenngrößen werden dann die möglichen Schaltpfade ermittelt und an eine nachgelagerte Software-Komponente zur Steuerung und Überwachung der Schaltvorgänge übergeben.

Zur Überwachung und Steuerung des Fortschreitens entlang der Schaltpfade dienen ebenfalls zu parametrierende Anbindungen an die Anlagenkommunikation.

Ergeben sich Veränderungen an der Anlage, so muss das eigenständige Anlagenschaltmodell mit den beteiligten Informationen nachgezogen und die Schaltpfade manuell neu generiert und zur Anwendung gebracht werden. Diese energieeffizienzbezogenen Arbeiten stellen Mehraufwände bei der Einrichtung und beim Betrieb von Anlagen dar, sowohl hinsichtlich der Datenhaltung als auch der Arbeitsschritte.

Die notwendigen Informationen sind heute in verschiedenen Engineeringtools, Dokumenten sowie ggf. als Wissen beteiligter Personen (Anlagenfahrer, Bediener, Inbetriebsetzer) verfügbar und müssen manuell ausgewertet werden

Im Folgenden werden bekannte Arten von Abhängigkeiten bei Schaltvorgängen zum Zweck des Änderns des Energiebedarfs einer automatisierten Maschine oder Anlage und die zugrundeliegenden Ursachen beschrieben.

"Abhängigkeit" bedeutet im Folgenden, dass für eine bestimmte Schalthandlung Bedingungen erfüllt sein müssen, damit die Schalthandlung nicht zu einem Fehlerzustand der Anlage oder einzelner Komponenten führt.
1. Es gibt Abhängigkeiten bzgl. Erreichbarkeit von Kommunikationspartnern: andere Komponenten müssen erreichbar sein (z. B. für eine Anmeldung oder Bestätigung der Erreichbarkeit einer "Nachbarstation" etc.).
   Sonderfälle hierzu wären
   Safety: Für einen Automatikmodus müssen in der Regel alle Teilnehmer eines Sicherheitskreises erreichbar sein, damit dieser geschlossen werden kann.
   Wechselseitige Anmeldung: Anlagen können so implementiert sein, dass ein Hochlaufprozess immer zu einem Fehler führt (wechselseitige Abfrage beider Kommunikationspartner bei nicht absolut synchronem Hochlauf). In einem solchen Fall kann eine automatische Quittierung von Fehlern als "Schaltaktion" notwendig sein.
2. Es gibt Abhängigkeiten von der Medienversorgung, Nebenaggregaten und/oder Infrastrukturkomponenten: Anlagen bzw. Komponenten können in der Regel nur sinnvoll betrieben werden, wenn die Versorgung mit verschiedenen Medien in ausreichendem Maße sichergestellt ist. (Kühlwasser, technische Gase, Druckluft ...)
   Der Betrieb von Anlagen kann es erfordern, dass sekundäre Prozesse oder Infrastrukturelemente in bestimmten Zuständen vorhanden sind (z. B. technische Absaugung, Raumklimatisierung und Beleuchtung sind eingeschaltet).
3. Es gibt Abhängigkeiten im Materialfluss: Gekoppelte Anlagen können es erfordern, dass vor- oder nachgelagerte Anlagenteile eingeschaltet sind, insbesondere wenn beide Anlagenteile an Übergabeprozessen beteiligt sind. Gleichzeitig lassen sich ggf. Schaltstrategien aus Materialflussabhängigkeiten ableiten. Im Extremfall schaltet man immer nur Anlagenteile ein, durch die gerade ein Teil läuft.
4. Es gibt Anlaufprozesse: Es kann notwendig sein beim Einschalten Reihenfolgen und ggf. zeitliche Randbedingungen einzuhalten, wenn Prozesse dies erfordern, wie Aufwärmphasen, Anlauf von Werkzeugmaschinen, Entkopplung von Einschaltspitzen.
5. Es gibt Abfahrprozesse / Taktende
   Dabei kann es prozesstechnische Gründe für Abschaltreihenfolgen und Nachlaufzeiten geben (z. B. Abkühlphasen). Arbeitsschritte sind nicht beliebig unterbrechbar, sondern müssen erst in einen definierten Endzustand (z. B. einen sicheren Zustand einer Maschine oder Anlage) gebracht werden (auch "Taktende" genannt).

Vertreter der oben beschriebenen Problemlösung finden sich beispielsweise in den Siemens-internen Aktivitäten wie der prototypischen Umsetzung eines sogenannten "Energy State Controllers", der bereits aus der EP 2726945 A1 bekannt ist.

Weitere Patent-Anmeldungen im Kontext energetische Schaltsysteme sind bekannt, beispielsweise:
- ein System für die automatische Erstellung von Schaltsequenzen unter Berücksichtigung von energetischen Schwellwerten (EP 2798418 A1)
- die Initiale Ermittlung von Systemparametern mittels automatischem Durchlauf synthetischer Betriebsszenarien (EP 2729845 A1)
- ein Projektierungstool für Energieverhalten von Anlagenkomponenten (EP 2729853 A1)
- ein Abschalt- und Wiederanlaufkonzept für Anlagen zur Erhöhung der Energieeffizienz, basierend auf autonomen Systemen (EP 2802947 A1),
   und im Kontext von Sequenzgenerierung:
   - Dynamische Taskflows und ihre Generierung (WO 2009/021540).

Aus der US 2013/0218437 A1 ist bereits ein Verfahren bekannt zur Generierung einer Schaltsequenz von Betriebszuständen einer Turbine und zugehöriger Zusatz-Systeme wie Ventile etc. Dabei wird zur Ermittlung ein Zustandsmodell der Anlage mit zusätzlichen, schaltungsrelevanten Größen verwendet.

Es ist nun Aufgabe der Erfindung, ein gegenüber dem bereits bekannten Stand der Technik verbessertes Verfahren für die Generierung von Schaltsequenzen anzugeben.

Die Aufgabe wird gelöst durch den in dem unabhängigen Patentanspruch beanspruchten Gegenstände.

Das Verfahren generiert eine Schaltsequenz in einer industriellen Anlage bestehend aus einzelnen Komponenten zur Überführung der Gesamtanlage in einen energiesparenden Zustand, unter Verwendung eines Zustands-Modells der Anlage bezugnehmend auf die Komponenten und Informationen zu einem aufgabenspezifischen Aktionsschema ergänzt wird in Form eines anwendungsfallbezogenen Regelwerks aus modellbezogenen Vorbedingung-Effekt-Beschreibungen, mit denen in einem ersten Schritt das Zustands-Modell um die aufgabenspezifischen Aktionsschemata zu einem erweiterten Zustandsmodell und in einem zweiten Schritt ausgehend von einem gewünschten Zielzustand der Anlage zu einem Anfangszustand in dem erweiterten Zustands-Modell zurück gerechnet wird um in einem dritten Schritt die Schaltsequenz vom Anfangszustand zum Zielzustand zu erzeugen.

Weitere Ausführungsformen der Erfindung sind in den Unteransprüchen beschrieben.

Die Ermittlung von Schaltpfaden auf Basis von Komponenten und ihren Zusammenhängen wird als ein Planungsproblem in einem jeweils gültigen Zustandsraum betrachtet. Dieser Zustandsraum wird beschrieben durch ein dynamisch veränderliches prädikatenlogisches, semantisches Anlagenmodell, welches über den Anlagenlebenszyklus mitwachsen kann und damit den jeweils aktuellen strukturellen Aufbau und Funktionsweise (Prozessinformation) und die Zustände der Anlage beschreibt, sowie die benötigten Energie-/Standby-relevanten Informationen als Modell-Informationen integriert mitführt. Schaltrelevante Größen, wie z. B. Schaltzeiten auf Aggregatebene, können in einem "Modell-Vorbereitungsschritt" aus den Repräsentanten für die Einzelkomponenten automatisch abgeleitet werden und brauchen nicht manuell eingepflegt zu werden. Ebenso kann mit Hilfe des Modells die Frage nach Synchronisationszuständen auf Aggregatebene aus Anlagentopologie und Schaltzeiten automatisiert durch Ableitung beantwortet werden und benötigt keine manuellen Eingriffe mehr.

Schaltsequenzen sind aus Schaltaufgaben-bezogenen Kombinationen von bestimmten Aktionen in einem bestimmten Kontext zusammengesetzt; dazu werden nur diejenigen Variablen betrachtet, die für die jeweilige Aufgabenstellung des Standby-Schaltens relevant sind.

Hierfür werden sog. Aktionsschemata, d. h. anwendungsfallbezogene Regelwerke, in Form von modellbezogenen Vorbedingungs-Effekt-Beschreibungen verwendet. Diese umfassen für jede mögliche/vorgedachte Schaltaktion auf einer Komponente (oder auch einem Komponententyp) eine Reihe von Vorbedingungen in Form von prädikatenlogischen Aussagen auf dem Modell sowie einen, ebenfalls als prädikatenlogische Aussage formulierten, Effekt.

Diese Aktionsschemata geben auch diejenigen Informationen vor, die ein Anlagenmodell enthalten muss, um, wie in diesem Fall, als "energieschaltgeeignet" zu gelten. Erzeugt werden kann ein Aktionsschema automatisch aus einem gegebenen semantischen Modell auf Basis von Klassen von Elementen unter Verwendung von Wissen aus dem Metamodell zusammen mit dem konkreten Anlagenwissen.

Dazu sind etwa folgende Start-Informationen erforderlich:
Die für die semantisch grundlegenden, durch das Metamodell vorgesehenen, Zusammenhangstypen
- Partonomie ("is-part-of"-/"has-part"- Beziehung),
- Taxonomie ("is-a"- Beziehung) und
- Topologie ("is-related-to"-Beziehung)
sowie einem allgemeingültigen Abhängigkeitszusammenhang ("depends-on"-Beziehung) vorzusehenden Behandlungen der jeweils verbundenen Komponenten gemäß der Zusammenhangsrichtung, sowie eine Priorisierung der Zusammenhänge für die spätere Betrachtung. Die Priorisierungen können einfach Ranglistenbasiert sein oder zeitbehaftet, wobei die hierfür gültigen Möglichkeiten in (Allen, James F.: Maintaining Knowledge about Temporal Intervals. In: Communications of the ACM Bd. 26 (1983), Nr. 11, S. 832-843) beschrieben sind.

Die Behandlungen können dabei von einem einfachen Umschalten von Werten bis hin zu komplexen zeitbehafteten und überwachten Vorgängen reichen.

Weiterhin werden Informationen zu charakterisierenden Zusammenhängen zwischen Komponenten im Anlagenmodell benötigt, z. B. is-part-of oder depends-on Beziehungen. Damit sind die grundlegenden Klassen als Basis für die Vorbedingungen umrissen, etwa als "eine Klasse je Zusammenhang".

Informationen zu dem auf den Klassen übergreifend zu erzielenden Effekt, welcher sich automatisch aus elementbezogenen, z. B. durch boolesche Attribute beschriebene, Effektrepräsentanten ableiten lässt (Standby = true), sowie die Information, ob und wie der Effekt ausgelöst werden darf.

Letztlich wird der Startzustand des Modells benötigt, d. h. welche initiale Belegung der Effektrepräsentanten gelten soll.

Für die Bestimmung des Aktionsschemas wird das konkrete Anlagenmodell anhand der oben genannten Start-Informationen untersucht und zur Reduktion der Komplexität nur die tatsächlich vorhandenen Zusammenhänge im Weiteren betrachtet. Für die in den Zusammenhängen beteiligten Komponenten werden anhand des Startzustands, des zu erzielenden Effekts sowie der vorgesehenen Behandlungen entsprechende lokale Vorbedingungen je Zusammenhang abgeleitet, die nachfolgend zu globalen Vorbedingungen je Aktion kombiniert werden.

Anhand der so ermittelten Aktionen wird dann im Rahmen der Modell-Vorbereitung dieses darauf untersucht, ob z. B. Effektrepräsentanten und Größen, die zur Aktionsdurchführung erforderlich sind, an allen beteiligten Elementen hinterlegt sind, und das Modell ggf. ergänzt.

In diesem Fall der Modell-Vorbereitung für Standby-Aktionen kann folgender Ansatz verfolgt werden, um die erforderlichen Informationen im Modell zu hinterlegen: Sobald eine (Teil-) Komponente ihren Zustand des Erfüllens der Hauptfunktion wegen Standby-Anforderung verlässt, kann auch das übergeordnete Aggregat (bestehend aus einer oder mehr Komponenten) seine Hauptfunktion nicht mehr erfüllen. Dies ist jedoch noch kein zwingender Standby-Zustand für das Aggregat, sondern stellt einen Zwischenzustand dar. Dieser wird in das Zustandsmodell des Aggregats übernommen ("bottom-up"). Daraus und aus den im Anlagenmodell beschriebenen Zusammenhängen werden die Schaltzeiten und Einschränkungen ermittelt: "weil Komponente *A* 5 Sekunden für den Übergang in den Zustand Standby benötigt und Komponente *B* 8 Sekunden, benötigt das Aggregat A*B* min. 8 sec., und weil A*B* erst abschalten kann, wenn die Kopplung zu Aggregat C aufgelöst ist, das 11 Sekunden für den Übergang in den Zustand Standby braucht, verlängert sich die Zeit für *AB* um min. 3 Sekunden", usw.

Derartige Anlagenmodelle mit entsprechender Aussagefähigkeit existieren bereits im Kontext der Digitaler Fabrik und Production (System) Lifecycle Management (P(S)LM). Ein "Darüberlegen" von Aktionsschemata definiert somit diejenigen anwendungsfallbezogenen Varianten, die in das Modell aufgenommen werden müssen, um die Anwendungsfälle ausführen zu können. Gleichwohl kann ein derartiges Anlagenmodell durch Hinzunahme eines neuen Aspektes, z. B. die Sicherheit, erweitert und geprüft werden, so dass während der Modell-Vorbereitung ggf. Warnungen ausgegeben werden können, dass das Modell zu bestimmten erwünschten Aspekten noch nicht die erforderlichen Informationen enthält.

Bei Ausführwunsch einer derart beschriebenen und unterfütterten Schaltaktion auf einer Komponente/Aggregat/... zum aktuellen Zeitpunkt wird, ausgehend vom gewünschten Effekt, geprüft, welche Vorbedingungen erfüllt sein müssen, damit die Aktion durchgeführt werden kann ("Rückwärtssuche" mit Suchraumbegrenzung). Die Betrachtung dieser Vorbedingungen liefert dann diejenigen Schaltaktionen, die durchgeführt werden müssen, um über deren Effekte die Vorbedingungen als erfüllt betrachten zu können. Diese Suche wird solange fortgesetzt, bis der aktuelle Gesamtzustand erreicht ist. Die darüber ermittelte Menge von Schaltaktionen wird, da theoretisch alternative Schaltreihenfolgen möglich sind, in einem kriteriengesteuerten Linearisierungsschritt zu einer eindeutigen Sequenz von Schaltaktionen umgeformt. Diese Sequenz stellt den zu befolgenden Schaltpfad dar. Dieser enthält aus dem Anlagenmodell die in den jeweiligen Schritten zu befolgenden Steuer- und Überwachungssignale an die Anlage.

Für das Befolgen des generierten Schaltpfads wird diese an eine Ausführungsinstanz ("Engine") übergeben, die die Sequenz ähnlich einem Programmskript abarbeitet, den Fortschritt der Einzelaktionen überwacht und Rückmeldungen an das aufrufende System gibt. Darüber wird signalisiert, ob die Schaltaktionen ausgeführt werden konnten, und wenn nicht, dass eine entsprechende Abhilfemaßnahme oder Umgehungslösung ermittelt werden soll, jeweils unter Berücksichtigung des aktuellen, jederzeit veränderlichen Anlagenmodells sowie Anlagengrö-ßen/Prozesswerten.

Im Folgenden wird die Erfindung anhand von Figuren weiter erläutert. Dabei zeigt
Figur 1 das Zusammenspiel der beteiligten Akteure zur Generierung von Schaltsequenzen
Figur 2 ein Beispiel Anlagenmodell mit Startinhalten und abgeleiteten Inhalten,
Figur 3 eine Illustration von Abläufen von Schritt 1 und Schritt 2 der Berechnung.

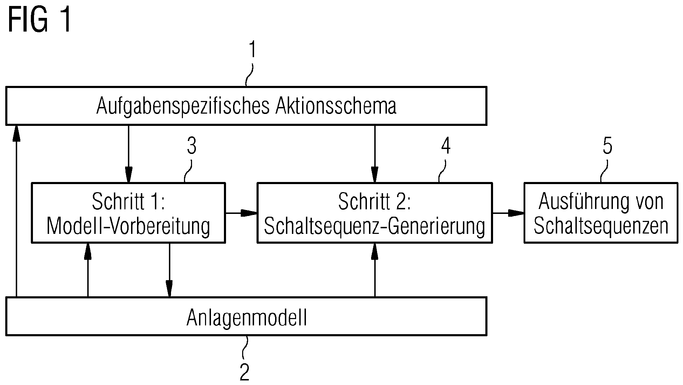

Figur 1 zeigt ganz allgemein das Zusammenspiel der Akteure zur Schaltsequenzgenerierung. Dabei sieht man unten das zugrunde liegende Anlagenmodell, 2 und oben das Aufgabenspezifische Aktionsschema für die Anlage, 1. In Schritt 1, werden beide Informationen miteinander verknüpft, zur Modell-Vorbereitung, 3. Danach erfolgt Schritt 2, in dem basierend auf den zuvor erzeugten Informationen, die Schaltsequenz generiert wird, 4. Die so erzeugte Schaltsequenz wird zur Ausführung an die Anlage bzw. deren Komponenten übergeben, 5.

Gemäß der Erfindung können energiebezogene Zusammenhänge zwischen Komponenten so automatisch aus vorhandenem Wissen sukzessive während des Anlagenlebenszyklus und je nach vorhandenem Wissen abgeleitet und ergänzt werden und müssen nicht, wie bisher, unter vollständiger a-priori-Kenntnis der Anlage manuell eingebracht werden.

Im Folgenden werden Beispiele für Zusammenhänge in Form von Abhängigkeiten angegeben.

Quellen in denen Informationen bzgl. Abhängigkeiten hinterlegt sind können beispielsweise sein:
Zu Abhängigkeiten bezüglich Erreichbarkeit von Kommunikations-Partnern: In einem E-Plan sind in der Regel Sicherheitskreise beschrieben. Allgemeine Kommunikationsbeziehungen sind heute oft nur schwer nachzuvollziehen (sie können Teil der SW-Dokumentation sein). In einem zukünftigen Anlagenmodell sollten "logische" Kommunikationsbeziehungen allerdings abgebildet sein. In Austauschformaten für Engineering Tools werden solche Kommunikationsbeziehungen bereits heute abgelegt (z. B. AutomationML).

Zu Medienversorgung und Nebenaggregaten: Pläne der Medienversorgung RI-Fließbilder, Abfragen / Bedingungen in Automatisierungsprogrammen, oder innerbetriebliche und gesetzliche Betriebsvorschriften von Anlagen.

Zu Materialfluss: Materialflusssimulationen (z.B. PlantSimulation), Abfragen / Bedingungen in Automatisierungsprogrammen.

Zu Anlaufprozessen: Prozessbeschreibungen und Simulationen, Betriebsvorschriften für Maschinen und Anlagen, Abfragen / Bedingungen in Automatisierungsprogrammen.

Zu Abfahrprozessen / Taktende: Prozessbeschreibungen und Simulationen, Materialflusssimulationen (z.B. PlantSimulation), Betriebsvorschriften für Maschinen und Anlagen, Abfragen / Bedingungen in Automatisierungsprogrammen.

Erfindungsgemäß kann der Anwender nun auch unvollständige und/oder veränderliche Modelle verwenden. Gleichzeitig können bereits vorhandene Modelle, wie sie etwa im P(S)LM Umfeld bekannt sind, weiter verwendet werden bzw. es kann auf ihnen aufgesetzt werden.

Verändert sich ein Modell zur Laufzeit, z. B. aufgrund von Anlagenumbauten oder -konfigurationen, können diese Änderungen automatisch berücksichtigt und die relevanten Schaltpfade angepasst werden.

Änderungen in der Anlagendynamik, z. B. bei Verschiebungen im Produktionsprozess, Störungen oder Schichtplanänderungen, kann ebenso ohne zusätzliche Projektierungsschritte adaptiv Rechnung getragen werden.

Es kann eine einzige zentrale Logik homogen für mehrere heterogene Anwendungsfälle genutzt werden, basierend auf einer dedizierten Anpassung durch die zugehörigen anwendungsfallspezifischen Aktionsschemata. Dies führt zu einer vereinfachten Systemarchitektur, da nur ein einziges Modell, das Wissen zu den verschiedenen zu bedienenden Anwendungsfällen enthält, sowie ein einziger algorithmischen Ansatz betrachtet werden müssen.

Die Verwendung einer Rückwärtssuche erlaubt eine feingranulare, adaptive Dynamisierung der Schaltpfad-Ermittlung auch zur Laufzeit, auch während bereits eine Schaltpfadausführung begonnen hat (dynamische Suche nach Umgehungslösung), und dies auch bei einer Modifikation des Modells selbst während laufender Schaltpfadausführung.

Das Hinzufügen neuer Funktionalitäten im Kontext Energiemanagement zu Systemen im Umfeld der Digitalen Fabrik/P(S)LM wird vereinfacht, ebenso wie das anwendungsfallübergreifende Engineering vereinfacht wird. Weiterhin lassen sich Fragestellungen nach dem prognostizierten Verhalten von Anlagen bei verschiedenen Schaltaktionen bereits während des Engineerings beantworten, da eine Simulation des Anlagenverhaltens direkt auf den generierten Schaltsequenzen aufsetzen kann.

Des Weiteren sind auch integrierte Kombinationen von Anwendungsfällen möglich: so kann etwa beim Auftreten eines Schaltfehlers auf dem Schaltpfad dem Anwender automatisch und dynamisch eine passende Erläuterung möglicher Ursachen ermittelt und Abhilfe-Maßnahmen in Form von Reparaturanleitungen angeboten werden. Grundlage hierfür ist die Anwendung o. g. Vorteile, insbesondere der automatischen Aktionsschemaermittlung für Schaltaktionen, zusammen mit den heute bereits existierenden Eigenschaften der Erzeugung interaktiver Reparaturanleitungen, welche eine dynamische, adaptive Sequenzgenerierung heute bereits beherrschen.

Je nach Ausgestaltung des Metamodells, was auch zu beliebigen Zeitpunkten erfolgen kann, ist es möglich, weitere Aspekte in die Betrachtung nachträglich mit einzugliedern. Beispielsweise können auf Wunsch noch Sicherheitsanforderungen mit berücksichtigt und damit automatisch Hinweise geliefert werden, ob das konkrete Anlagenmodell diesen Zusatzanforderungen genügt und welche erzeugte Schaltpfade mit Vorsicht zu behandeln sind.

Mit dem hier beschriebenen Verfahren wird unterstützt, dass Energieschaltkonzepte und -Steuerungssysteme nicht als "nebenstehende" Systeme betrachtet werden, sondern stattdessen eine bessere Integration und Informationsdurchgängigkeit in den normalen Funktionsumfang von Anlagen und Software-Landschaften erfahren (Stichworte: P(S)LM, MES (Manufacturing Execution System), ERP (Enterprise Resource Planning), die bereits auf semantischen Anlagenmodellen basieren.

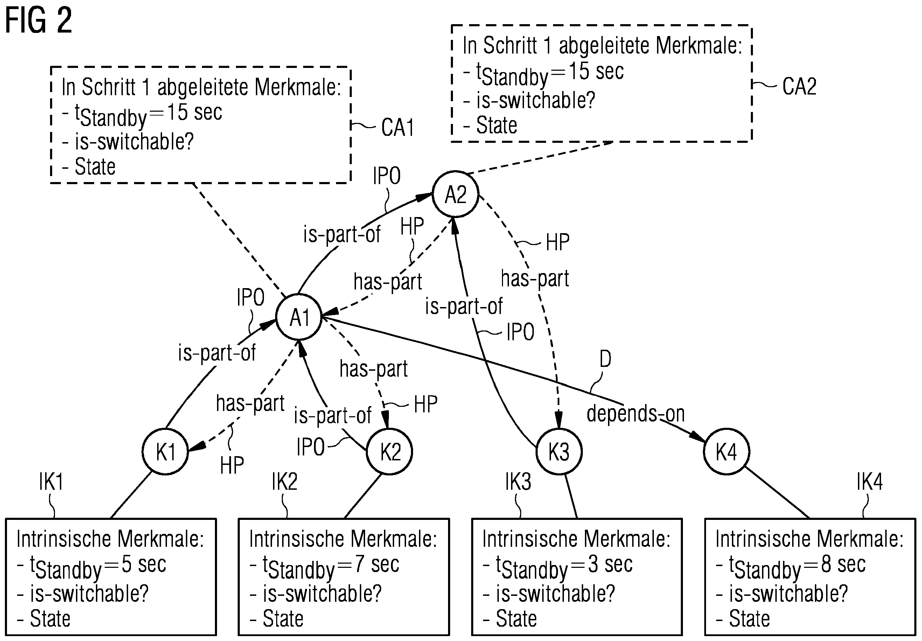

Das nachfolgende Beispiel in Figur 2 verdeutlicht das Funktionsprinzip der automatischen Generierung von Schaltsequenzen. Gegeben seien vier Komponenten K1, K2, K3 und K4, die jeweils zwei schaltbare Zustände "On" (Produktivzustand) und "Standby" besitzen. Zu diesen Komponenten sind jeweils intrinsische Merkmale bekannt, nämlich
- die Zeit t_{Standby}, die benötigt wird, um vom Zustand "On" nach "Standby" zu wechseln ("Zeit_bis_Standby"),
- "is-switchable" (schaltbar) als Prädikat, welches angibt, ob aktuell umgeschaltet werden kann (im Sinne der Funktionsfähigkeit, "Darf_in_Standby geschaltet werden" in diesem Beispiel),
- "State" als Funktion, welche den aktuellen Zustand abfragt / liefert oder festlegt (Umschalten). Dies soll in diesem Beispiel als Vereinfachung eines Prädikats "is-Standby" und dessen Handhabung dienen.

Als Zusammenhänge zwischen den Komponenten werden in einem Anlagenmodell beschrieben, dass K1 und K2 zusammen Teil einer Aggregatskomponente A1 sind. Die Tatsache, dass A1 ein Aggregat ist, lässt sich aus den Beteiligungen von A1 in "is-part-of"-Beziehungen ableiten. A1 ist wiederum Teil einer Aggregatskomponente A2, von der Komponente K3 ein weiterer Bestandteil ist.

Aggregatskomponenten A1 und A2, als abgeleitete oder definierte Instanzen von "System", bilden damit ein komplexes Aggregat ab. Darin ist die Schaltbarkeit von Aggregatskomponente A1 von der außerhalb dieser Aggregatgrenze liegenden, z. B. zu einem anderen, hier nicht näher beschriebenen, Aggregat gehörenden Komponente K4 abhängig.

Die sich daraus ergebende und als Grundlage für den weiteren Prozess dienende Modellstruktur ist in Figur 2 durch die Knoten A1, A2, K1, ... K4 sowie durchgezogen gezeichneten Kanten (Verbindungen zwischen Knoten) dargestellt ("is-part-of" als "Partonomie-Kopplung" sowie "depends-on" als "Komponenten-System- Kopplung").

Desweiteren sind für die grundlegenden semantischen Zusammenhänge folgende beispielhaften zeitlichen Behandlungen für Schaltaktionen folgende Regeln definiert:
Regel 1: Bei einem Vorkommen von "has-part"-Beziehungen sollen alle Beziehungspartner gleichzeitig geschaltet werden:
   ∀X, Y: has-part (X, Y) → starts-with (X, Y).
   Das gewünschte Schaltergebnis soll für X nach Vorliegen des Schaltergebnisses für Y vorliegen.
Regel 2: Bei einem Vorkommen von "is-a"-Beziehungen soll keine Schaltaktion ausgelöst werden (alle Taxonomie-Zusammenhänge neutral).
Regel 3: Bei einem Vorkommen von "is-related-to"-Beziehungen sollen zuerst die Ursprungspartner, danach die Zielpartner geschaltet werden:
   V X, Y: is-related-to (X, Y) ->before (X, Y).
Regel 4: Bei einem Vorkommen von "depends-on"-Beziehungen sollen zuerst die Zielpartner und erst danach die Ursprungspartner geschaltet werden:
   V X, Y: depends-on (X, Y) →after (X, Y).

Gemäß dieser Vorschriften wird später die Ausführung der Schaltaktionen überwacht. Dabei wurde für diese Regeln bewusst "has-part" gewählt, da diese als Inverse aus dem modellierten "is-part-of" abgeleitet werden kann. Weiterhin ist in diesem Beispiel die Priorisierung der Zusammenhänge so definiert, dass "depends-on" zu einer Vorrangbehandlung vor "is-part-of" führt, also "before (depends-on, is-part-of)" als anwendungsfallspezifisches Kriterium.

Auf dieser Basis werden automatisch anhand des Metamodells im Anlagenmodell nur für Regel 1 und Regel 4 Kandidaten identifiziert, da nur deren referenzierte Zusammenhänge modelliert sind. Aus diesen Kandidaten werden wiederum nur drei Klassen von Entitäten als vorliegend und damit für die weitere Betrachtung relevant identifiziert:
K1. Entitäten, die aus weiteren Entitäten bestehen, d. h. solche, bei denen nur ein Zusammenhang "is-part-of" bzw. invers "has-part" gilt:
   has-part (X, Y) Λ ¬depends-on (X, Y).
K2. Entitäten, die aus weiteren Entitäten bestehen und zugleich noch Abhängigkeiten zu weiteren Entitäten aufweisen, d. h. solche, bei denen sowohl "is-part-of"/"has-part" als auch ein "depends-on"-Zusammenhang gilt:
   has-part (X, Y) ∧ depends-on (X, Z).
K3. Entitäten, die nicht weiter untergliedert werden können und auch keine Abhängigkeiten haben, d.h. solche, bei denen weder "is-part-of" noch "depends-on" gelten:
   - has-part (X, Y) ∧¬depends-on (X, Y).

Da gemäß der Zusammenhangspriorisierung "has-part (X, Y)" und "depends-on (X, Y)" unterschiedlich sind, lässt sich nun sagen, dass drei verschiedene Vorbedingungen automatisch beschrieben werden müssen, nämlich für K1, K3 und den "depends-on"-Teil von K2, denn dessen Erfüllung erlaubt die nachfolgende Erfüllung von "has-part". Unter Anwendung des Startzustands des Modells sowie der Effektvorgabe "Standby := true" für alle Entitäten, d. h. "State (X) := true", ergibt sich letztlich das für das koordinierte Schalten aller Entitäten, d. h. Komponenten und Aggregate, aus dem Zustand "On" nach "Standby" das Aktionsschema mit den kontextbezogenen Schaltmöglichkeiten ("Schalteffekt kann eintreten, wenn Vorbedingung erfüllt ist"). Die Vorbedingungen der jeweiligen Schaltaktionen enthalten dabei diejenigen Prädikate, die das Anlagenmodell für die Ermittlung der Schaltsequenz grundsätzlich bedienen können muss.
K1: Intrinsische Merkmale:
   - t_{Standby}= 5 sec
   - is-switchable?
   - State
K2: Intrinsische Merkmale:
   - t_{Standby} = 7 sec
   - is-switchable?
   - State
K3: Intrinsische Merkmale:
   - t_{Standby} = 3 sec
   - is-switchable?
   - State
K4: Intrinsische Merkmale:
   - t_{Standby} = 8 sec
   - is-switchable?
   - State

### Aggregatgrenze

A1: In Schritt 1 abgeleitete Merkmale:
   - t_{Standby} = 15 sec
   - is-switchable?
   - State
A2: In Schritt 1 abgeleitete Merkmale:
   - t_{Standby} = 15 sec
   - is-switchable?
   - State

Dabei gilt folgendes: t_{Standby} ist die Zeit, die für das Schalten vom Zustand "On" in den Zustand "Standby" benötigt wird. "Is-switchable" : Gibt an, ob die Entität funktionsfähig (schaltbar) ist.

"State": ist ein Prädikat (Funktion), die den aktuellen Zustand {On, Standby} der Entität liefert oder festlegt. Gestrichelt dargestellt sind Elemente und Information, die durch Anwendung von Schritt 1 abgeleitet und ergänzt wird.

**Tabelle: Beispiel-Aktionsschema zum Schalten aller Entitäten in Standby**

| **Aktion** | **Vorbedingung** | **Effekt** |
|---|---|---|
| Set_Standby (X: Entity) | State (X) ≠ Standby ∧ is-switchable (X) Λ ¬(depends-on (X, Y) ∧Y: Entity Λ ¬(has-part (X, Y) Λ Y: Entity) | State (X) := Standby |
| Set_Standby_Dep (X: Entity) | depends-on (Y, X) Λ State (X) ≠Standby Λ is-switchable (X) Λ Y: Entity ∧State (Y) == On | State (X) := Standby |
| Set_Standby_Agg (X: Entity) | has-part (X, Y) Λ State (X) ≠Standby ∧ is-switchable (X) Λ Y: Entity Λ State (Y) == Standby | State (X) := Standby |

Die Anwendung von Schritt 1 ergänzt das Anlagenmodell einerseits auf Aggregatsebene um Merkmale, die aus den Komponenten anhand der Kopplungsinformationen abgeleitet werden können und die der Anwender damit nicht selbst explizit spezifizieren muss. Andererseits prüft und nutzt Schritt 1 auch Zusammenhangsinformationen, die vom Aktionsschema vorausgesetzt werden und die anhand von semantischen Definitionen im Metamodell hinsichtlich der Bidirektionalität von Kopplungen gelten ("Inverse").

Als Ergebnis von Schritt 1 stellt sich das Anlagenmodell danach wie in Figur 2 mit den gestrichelt gezeichneten, ergänzten Inhalten bzw. dem Wissen dar.

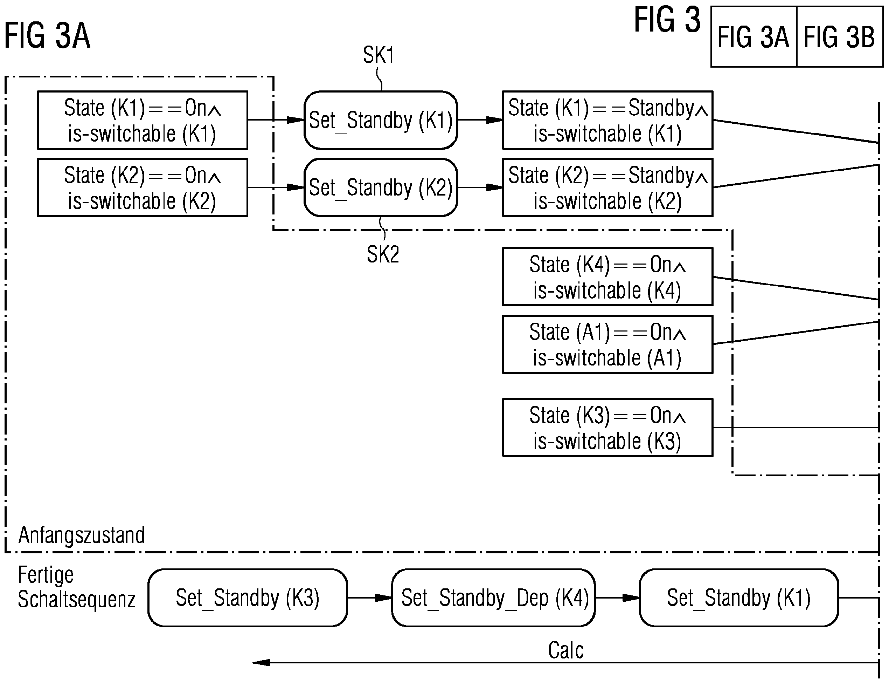

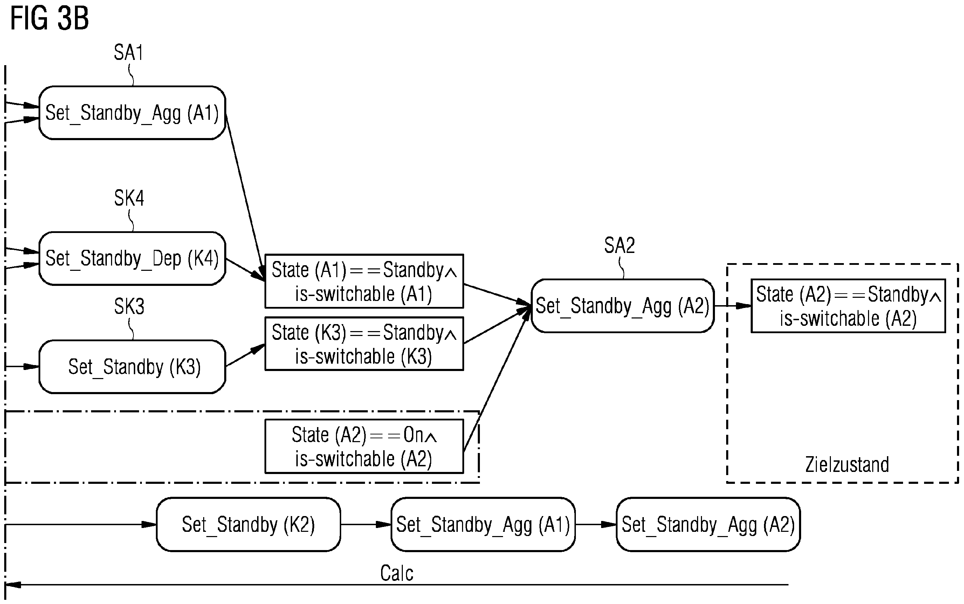

Auf diesem ergänzten Anlagenmodell kann nun Schritt 2 ausgeführt und darin mit Hilfe des Aktionsschemas die erfordernchen Schaltaktionen ermittelt und die fertige Schaltsequenz generiert werden, calc. Dieser Prozess mit seinen (Zwischen-) Ergebnissen ist in Figur 3 illustriert. Dabei gilt als - in der Abbildung umrissener - Anfangszustand:
∀X: State (X) == On nis-switchable (X).

Die Bedingung X: Entity wurde hier aus Vereinfachungsgründen weggelassen. Mit Vorgabe, dass als Zielzustand für A2, und damit für alle verbundenen Komponenten und Aggregate, gelten soll:
State (A2) == Standby,
werden nun anhand der möglichen Aktionen diejenigen gesucht, die diese Bedingung erfüllen (Rückwärtssuche unter Anwendung des Vorbedingungs-Effekt-Modells). Der sich daraus ergebende Graph wird anschließend linearisiert, wobei in diesem Beispiel als Linearisierungskriterien in folgender Reihenfolge gelten sollen (anwendungsfallspezifische Konfiguration):
1. Befolgen der Semantik der beteiligten Kopplungsprädikate und der daraus resultierenden Priorisierung bei mehrfachen Aktionen auf gleichen Entitäten (in diesem Beispiel bedeutet dies, dass bei Aggregat A1 die Aktionen von "depends-on" vor denen von "has-part" vollständig bearbeitet werden müssen).
2. Zeitkoordination von Aktionen innerhalb der Aktionsmenge: Aktionen mit kürzerer t_{Standby} werden zuerst ausgeführt.

Unter diesen Vorgaben liefert Schritt 2 die in Figur 3 dargestellte Schaltsequenz. Diese kann dann an die Instanz (Engine) zur Ausführung von Schaltsequenzen übergeben werden.

Anhand dieses Funktionsprinzips wird auch verdeutlicht, dass für diese schrittweise Ermittlung kein a-priori vollständiges Anlagen- und Schaltmodell erforderlich ist, sondern stattdessen anhand des jeweils verfügbaren Wissens soweit als möglich Aktionen und Sequenzen ermittelt und gegebenenfalls fehlende Informationen angemahnt werden können,

Bei Veränderung von dynamisch abzufragenden Schaltvoraussetzungen kann während der Ausführung von Schaltsequenzen in der realen Anlage (z. B. von "is-switchable (X)" zu "¬ is-switchable (X)" aufgrund etwa eines technischen Problems) eine erneute Schaltsequenzermittlung angestoßen werden, die dann womöglich zu einer anderen als der ursprünglichen Schaltsequenz führt, sowie, dass dynamisch Veränderungen am Anlagenmodell und/oder Aktionsschema vorgenommen werden können und damit sofort automatisch die Schaltsequenzermittlung an die neuen Gegebenheiten angepasst werden kann.

## Patentansprüche

1. Verfahren zur Generierung einer Schaltsequenz in einer industriellen Anlage bestehend aus einzelnen Komponenten (K1, K2, K3, K4) zur Überführung der Gesamtanlage in einen energiesparenden Zustand,
unter Verwendung eines Modells der Anlage (2) bezugnehmend auf die Komponenten und Informationen zu einem aufgabenspezifischen Aktionsschema (1) in Form eines anwendungsfallbezogenen Regelwerks aus modellbezogenen Vorbedingung-Effekt-Beschreibungen, wobei
in einem ersten Schritt das Modell der Anlage (2) um die aufgabenspezifischen Aktionsschemata (1) mit schaltungsrelevanten Größen zu einem erweiterten Zustandsmodell ergänzt wird und
in einem zweiten Schritt ausgehend von einem gewünschten Zielzustand der Anlage zu einem Anfangszustand in dem erweiterten Modell der Anlage zurück gerechnet wird (calc) auf der Grundlage des anwendungsfallbezogenen Regelwerks unter Anwendung des Vorbedingungs-Effekt-Modells
in einem dritten Schritt die Schaltsequenz (SEQ) vom Anfangszustand zum Zielzustand zu erzeugen zur Ausführung (5) auf der Anlage.

2. Verfahren gemäß Patentanspruch 1,
**dadurch gekennzeichnet, dass**
das Modell der Anlage Aggregate (A1, A2) berücksichtigt, wobei die Aggregate aus zumindest einer Komponente (K1, K2, K3, K4) bestehen und aufgabenspezifische Aktionsschemata auf Aggregatebene existieren.

3. Verfahren gemäß einem der vorherigen Patentansprüche,
**dadurch gekennzeichnet, dass**
für die Bestimmung des erweiterten Modells der Anlage (2) nur tatsächlich in der Anlage vorhandene Zusammenhänge betrachtet werden.

4. Verfahren gemäß einem der vorherigen Patentansprüche 2 oder 3,
**dadurch gekennzeichnet, dass**
für die Bestimmung eines Aggregatszustandes (SA1, SA2) die Kenntnis von zumindest eines Zustands einer Komponente (SK1, SK2, SK3, SK4) des Aggregats ausreichend ist.

5. Verfahren gemäß einem der vorherigen Patentansprüche,
**dadurch gekennzeichnet, dass**
eine Änderung oder Ergänzung des Modells der Anlage oder Aktionsschemas zur Neuberechnung der Schaltsequenz führt.

6. Verfahren gemäß einem der vorherigen Patentansprüche,
**dadurch gekennzeichnet, dass**
mit Hilfe der generierten Schaltsequenz die Simulation des Anlagenverhaltens ermöglicht wird.

7. Verfahren gemäß einem der vorherigen Patentansprüche,
**dadurch gekennzeichnet, dass**
beim Auftreten eines Schaltfehlers auf dem Schaltpfad dem Anwender eine Fehleranalyse angeboten wird.

8. Verfahren gemäß einem der vorherigen Patentansprüche,
**dadurch gekennzeichnet, dass**
in dem erweiterten Modell der Anlage weitere Aspekte berücksichtigt werden, welche nicht zwingend zur Ausführung der Aufgabe erforderlich wären.

## Claims

1. Method for generating a switching sequence in an industrial plant consisting of individual components (K1, K2, K3, K4) for transferring the entire plant to an energy-saving state,
using a model of the plant (2) with regard to the components and information about a task-specific action schema (1) in the form of an application-case-based set of rules comprising model-dependent precondition-effect-descriptions, wherein,
in a first step, the model of the plant (2) is supplemented with the task-specific action schemata (1) using circuit-relevant variables to form an extended state model and,
in a second step, proceeding from a desired target state of the plant, is calculated back (calc) to a start state in the extended model of the plant on the basis of the application-case-based set of rules with the application of the precondition-effect-model,
in order, in a third step, to generate the switching sequence (SEQ) from the start state to the target state for the execution thereof (5) on the plant.

2. Method according to Patent Claim 1,
**characterized in that**
the model of the plant takes units (A1, A2) into account, wherein the units consist of at least one component (K1, K2, K3, K4) and task-specific action schemata exist at unit level.

3. Method according to either of the preceding patent claims,
**characterized in that**
only relationships that are actually present in the plant are observed for the determination of the extended model of the plant (2).

4. Method according to either of the preceding Patent Claims 2 and 3,
**characterized in that**
the knowledge of at least one state of a component (SK1, SK2, SK3, SK4) of the unit is sufficient for the determination of a unit state (SA1, SA2).

5. Method according to one of the preceding patent claims,
**characterized in that**
changing or supplementing the model of the plant or action schema leads to recalculation of the switching sequence.

6. Method according to one of the preceding patent claims,
**characterized in that**
the simulation of the plant behaviour is made possible with the aid of the generated switching sequence.

7. Method according to one of the preceding patent claims,
**characterized in that**
a fault analysis is supplied to the user when a switching fault occurs on the switching path.

8. Method according to one of the preceding patent claims,
**characterized in that**
further aspects are taken into account in the extended model of the plant, said further aspects not necessarily being required for the execution of the task.

## Revendications

1. Procédé de génération d'une séquence de commutation dans une installation industrielle constituée de composantes (K1, K2, K3, K4) individuelles pour faire passer la totalité de l'installation dans un état d'économie d'énergie,
employant un modèle de l'installation (2) se rapportant aux composantes et à des informations sur un schéma d'action (1) spécifique aux tâches, sous forme d'un régulateur se rapportant aux cas d'application à partir de descriptions effet-précondition se rapportant au modèle, dans lequel
dans une première étape, le modèle de l'installation (2) est complété en un modèle d'état étendu par les schémas d'action (1) spécifiques aux tâches avec des grandeurs relevant de la commutation, et
dans une deuxième étape, en partant d'un état-cible souhaité de l'installation, un état de départ dans le modèle étendu de l'installation est recalculé (calc) sur la base du régulateur rapporté au cas d'application en utilisant le modèle effet-précondition,
dans une troisième étape, de produire la séquence de commutation (SEQ) de l'état de départ à l'état-cible pour exécution (5) sur l'installation.

2. Procédé selon la revendication 1,
**caractérisé en ce que**
le modèle de l'installation tient compte de groupes (A1, A 2), dans lequel les groupes sont composés d'au moins une composante (K1, K2, K3, K4) et des schémas d'action spécifiques aux tâches existent au niveau des groupes.

3. Procédé selon l'une des revendications précédentes,
**caractérisé en ce que**
pour déterminer le modèle étendu de l'installation (2) seules des relations effectivement présentes dans l'installation sont prises en compte.

4. Procédé selon l'une des revendications précédentes 2 ou 3,
**caractérisé en ce que**
pour déterminer un état de groupe (SA1, SA2), la connaissance d'au moins un état d'une composante (SK1, SK2, SK3, SK4) du groupe est suffisante.

5. Procédé selon l'une des revendications précédentes, **caractérisé en ce que** le fait de modifier ou de compléter le modèle de l'installation ou du schéma d'action conduit à un recalcul de la séquence de commutation.

6. Procédé selon l'une des revendications précédentes, **caractérisé en ce que** la simulation du comportement de l'installation est possible à l'aide de la séquence de commutation générée.

7. Procédé selon l'une des revendications précédentes, **caractérisé en ce que**
lors de la survenue d'une erreur de commutation sur le trajet de commutation, une analyse d'erreur est proposée à l'utilisateur.

8. Procédé selon l'une des revendications précédentes, **caractérisé en ce que**
dans le modèle étendu de l'installation, d'autres aspects sont pris en compte, lesquels ne seraient pas impérativement nécessaires pour l'exécution de la tâche.
